# EUROPEAN PATENT SPECIFICATION

(11) **EP 2 267 484 B1**
(45) Date of publication and mention of the grant of the patent: **09.08.2017**
(21) Application number: 09008184.5
(22) Date of filing: 22.06.2009
(51) Int. Cl.: G01T 1/169

(54) **Phantom for a tomographic medical imaging apparatus**
Phantom für eine medizinische tomographische Abbildungsvorrichtung
Fantôme pour appareil d'imagerie médicale tomographique

(43) Date of publication of application: 29.12.2010
(73) Proprietor: Scivis wissenschaftliche Bildverarbeitung GmbH, 37095 Göttingen (DE)
(72) Inventor: Engeland, Uwe, 37073 Göttingen (DE)
(74) Representative: Beier, Ralph

(56) References cited:
- CA-A1- 2 693 105
- US-A- 4 344 183
- US-A- 4 499 375
- US-A- 5 673 303
- US-A1- 2005 008 126
- US-A1- 2009 127 451
- US-B1- 6 744 039
- Cássio M Oliveira ET AL: "CHARACTERIZATION OF A PET-NEMA/IEC BODY PHANTOM FOR QUALITY CONTROL TESTS OF PET/CT EQUIPMENTS", International Nuclear Atlantic conference, 24 October 2011 (2011-10-24), XP055231544, Belo Horizonte, Brazil ISBN: 978-85-9914-104-5 Retrieved from the Internet: URL:http://www.iaea.org/inis/collection/NC LCollectionStore/_Public/43/056/43056338.p df [retrieved on 2015-11-26]

## Description

### Field of the invention

The invention relates to a phantom for simulation of an object (e.g. a patient) in a tomographic medical imaging apparatus.

Further, the invention relates to a tomographic medical imaging apparatus comprising such a phantom for simulation of an object, e.g. a patient.

### Background of the invention

The U.S. patent 4,499,375 discloses the so-called Jaszczak phantom which is commonly used for testing of tomographic medical imaging apparatuses like single photon emission computed tomography (SPECT) apparatuses. The Jaszczak phantom comprises a cylindrical container made of acrylic glass which can be filled with a radioactive solution serving as a radio contrast agent. Further, the Jaszczak phantom comprises several elongated structures in the form of parallel rods which are arranged within the cylindrical container. Moreover, it should be noted that there are several groups of rods comprising different diameters so that the spatial resolution of the tomographic medical imaging apparatuses can be tested using the Jaszczak phantom.

However, the conventional Jaszczak phantom does not allow a determination of the exact spatial resolution of a tomographic medical imaging apparatus since it is merely possible to determine an upper limit of the spatial resolution of the tomographic medical imaging apparatuses.

A further disadvantage of the conventional Jaszczak phantom is associated with the regularity of the arrangement of the rods within the Jaszczak phantom which can cause problems with regard to the use of reconstruction methods using filters like the so-called Wiener filter. These reconstruction methods used in modern tomographic medical imaging apparatuses may amplify spatially regular structures like the arrangement of the rods thereby distorting the determination of the spatial resolution of the tomographic medical imaging apparatus.

Further, US 5 673 303 discloses a phantom for a tomography apparatus wherein the phantom comprises an elongated structure in the form of a stepped cylindrical insert. Therefore, the cross-section of the elongated structure varies over its length in a cascaded form. However, this conventional phantom does not allow a precise determination of the spatial resolution of the tomography apparatus.

Further, reference is made to US 6 744 039 and US 2005/0008126 A1.

Moreover, US 4 344 183 discloses a phantom comprising cone-shaped inserts. However, the cone-shaped inserts are made of plastics, i.e. they do not create an image pattern detected by the tomography. Instead, image creating patterns are embedded into the cone-shaped inserts. However, these image creating patterns have a constant cross-section and therefore do not allow a continuous measurement of the spatial resolution of the tomographic medical imaging apparatus.

Further, US 2009/0127451 A1 discloses a phantom comprising spherical regions of contrast. However, these spherical regions of contrast do not allow a continuous measurement of these spatial resolution of the tomographic medical imaging apparatus.

Finally, reference is made to CA 2 693 105 A1 and Oliveira: Characterization of a PET-Nema/IEC body phantom for quality control tests of PET/CT equipments" International Nuclear Atlantic conference, 24 October 2011 Belo Horizonte, Brazil, ISBN: 978-85-9914-104-5.

### Summary of the invention

Therefore, it is a general object of the invention to provide an improved phantom for testing a tomographic medical imaging apparatus.

Particularly, it is an object of the invention to provide a phantom which does not cause the afore-mentioned problems with regard to the use of reconstruction methods using filters like the so-called Wiener filter.

Further, it is a particular object of the invention to provide a novel phantom which is suitable for an exact determination of the spatial resolution of a tomographic medical imaging apparatus.

It is a further object of the invention to provide a phantom which is suitable to measure the recovery coefficients and the homogeneity.

Moreover, the phantom preferably allows the testing of the tomographic medical imaging apparatus under different signal-to-noise ratios (SNR), lesion-to-background ratios and contrast-to-noise ratios.
These objects are achieved by a novel phantom according to the claim 1. The novel phantom comprises at least one elongated structure (e.g. an inner fluid container or a massive rod) for testing the spatial resolution of a tomographic medical imaging apparatus. However, the elongated structure comprises a cross section which varies over the length of the elongated structure.
In a preferred embodiment of the invention, the elongated structure is an inner fluid container which is arranged within the phantom and which can be filled with a contrast fluid, e.g. a radio contrast agent.
However, it is alternatively possible that the elongated structure is a massive or hollow rod having a cross section which varies over the length of the rod.
In the preferred embodiment of the invention, the elongated structure is substantially cone-shaped so that the elongated structure tapers along its length. For example, the cone-angle of the elongated structure can be in the range of 1°-10° and more preferably in the range of 2°-5°.

It should further be noted that the cross section of the elongated structure varies continuously over the length of the elongated structure in contrast to a cascaded change of the cross section over the length of the elongated structure. The continuous change of the cross-section of the elongated structures over their length allows a continuous measurement of the spatial resolution of the tomographic medical imaging apparatus.

Further, the afore-mentioned inner fluid container preferably comprises an inner diameter in the range of 1mm-20mm and more preferably in the range of 2mm-15mm, which is suitable for human SPECT applications. In case of small animal SPECT applications, the inner diameter of the inner fluid containers is preferably in the range of 0.1mm-2mm. Further, a diameter in the range of 0.5mm-10mm is preferred for positron emission tomography (PET). Moreover, a diameter in the range of 50µm-1mm is preferred for computer tomography of human beings. Finally, a diameter in the range of 100µm-2mm is preferred for magnetic resonance imaging (MRI). In other words, the preferred diameter of the inner fluid container depends on the type of imaging method (SPECT/CT/MRI) and the type of the object (human/animal).

In general, the lateral extension (e.g. diameter) of the elongated structure should vary between a smallest value below the spatial resolution of the tomographic medical imaging apparatus and a greatest value above the spatial resolution of the tomographic medical imaging apparatus. Such an arrangement allows an exact determination of the spatial resolution of the tomographic medical imaging apparatus.

The use of an inner fluid container as the elongated structure within the phantom allows a testing of a tomographic medical imaging apparatus with an active structure containing a radio contrast agent as opposed to a passive structure consisting of a massive rod as disclosed in the afore-mentioned U.S. patent 4,499,375.

Further, the phantom according to the invention preferably comprises an outer fluid container surrounding the elongated structure, wherein the outer fluid container can be filled with a fluid, e.g. a contrast agent. In the afore-mentioned preferred embodiment of the phantom comprising an inner fluid container as the elongated structure, it is possible to fill the inner fluid container on the one hand and the outer fluid container with different fluids, e.g. different radioactive liquids with different half-lives or different concentrations of activity. Further, it is also possible to fill the individual inner fluid containers with different fluids, e.g. different radioactive liquids with a different concentration of activity.

It should further be noted that the phantom and/or the outer fluid container is preferably shaped as a half cylinder so that the phantom can easily be placed on a patient bed of a conventional tomographic medical imaging apparatus, wherein the convex side of the half cylinder is placed on the patient bed. Further, the half-cylindrical shape of the outer fluid container or the outer cover is advantageous since the it allows to place the arrangement within a thorax-shaped phantom. However, it is alternatively possible that the phantom comprises a different shape although it is preferred that the phantom comprises a substantially flat side face so that the phantom can easily be placed on a patient bed of a conventional tomographic medical imaging apparatus.

In the preferred embodiment of the invention, the outer fluid container of the phantom comprises two opposing end faces which are preferably substantially parallel to each other.

In a first alternative of the invention, the elongated structure extends between the opposing end faces of the outer fluid containers. In other words, the elongated structure extends over the entire length of the outer fluid container.

In a second alternative of the invention, the elongated structure projects into the outer fluid container from one of the end faces of the outer fluid container without extending up to the opposing end face of the outer fluid container. In other words, the elongated structure merely extends over a portion of the length of the outer fluid container.

The phantom preferably comprises two end plates closing the opposing end faces of the outer fluid container. Further, there is preferably a plurality of elongated structures which are attached to the opposing end plates of the phantom. For example, a first number of the elongated structures can be attached to the first end plate, while a second number of the elongated structures is attached to the second end plate opposite the first end plate.

In this example, the elongated structures are preferably laterally displaced relative to each other so that the individual elongated structures are out of the sphere of influence of the adjacent elongated structures. In other words, the distance between the adjacent elongated structures is preferably sufficiently large to avoid an effect of the elongated structures on the measurement of the adjacent structures particularly during reconstruction.

It has already been mentioned that the elongated structures preferably taper along their length so that the elongated structures each comprise a base area and an opposing apex. In the afore-mentioned embodiment of the phantom comprising two opposing end plates for closing the opposing end faces of the outer fluid container, the base area of the elongated structures is attached to the end plates and the apex of the elongated structures axially projects into the outer fluid container.

It should also be noted that there are preferably several (e.g. more than 2, 4, 8 or more than 10) elongated structures within the phantom. In the preferred embodiment of the invention, there are twelve elongated structures arranged within the phantom.

Further, it is preferred that the elongated structures taper in opposing directions.

In the case of several inner fluid containers being arranged within the phantom, it is preferred that the inner fluid containers can be filled and emptied separately, e.g. through separate valves. Therefore, each of the inner fluid containers preferably comprises an associated valve so that the inner fluid containers can be filled and emptied separately from each other.

It should further be noted that the elongated structures are preferably arranged in parallel within the phantom.

Further, the lateral distance between the adjacent elongated structures is preferably greater than the spatial resolution of the tomographic medical imaging apparatus.

It should further be noted that the afore-mentioned inner fluid container and/or the outer fluid container preferably comprises a wall which is at least partially transparent. For example, the wall of the inner fluid container and/or the outer fluid container can be made of acrylic glass.

In an embodiment of the phantom according to the invention, the elongated structures are arranged substantially vertically within the phantom, wherein the elongated structures preferably taper from the upper side to the lower side of the phantom. Such an arrangement is advantageous if the elongated structures are inner fluid containers since it facilitates the filling of the inner fluid containers.

In a preferred embodiment of the invention the tomographic medical imaging apparatus detects a specific radiation, which is used for SPECT and PET applications, wherein the radiation preferably comprises an energy in the range of 25keV to 511keV. Further, the inner fluid container and/or the outer fluid container comprises walls which are preferably made from a material having a first attenuation coefficient regarding the radiation used by the tomographic medical imaging apparatus. Further, water comprises a second attenuation coefficient with regard to the radiation used by the tomographic medical imaging apparatus. The material of the walls of the fluid containers is preferably selected in such a way that the first attenuation coefficient of the material of the walls of the fluid containers corresponds to the second attenuation coefficient of water. In other words, the first attenuation coefficient is preferably in a range of ±10 %, ±5 % or even ±1 % around the second attenuation coefficient.

The afore-mentioned inner and outer fluid containers can be filled with a variety of fluids including gaseous fluids and liquid fluids, e.g. air, inactive water, a contrast agent (e.g. a radio contrast agent or an MRI contrast agent) or a radioactive liquid). It should further be noted that the inner fluid containers on the one hand and the outer fluid container on the other hand can be filled with different fluids, e.g. radioactive fluids comprising a different concentration of activity. If the phantom comprises several inner fluid containers, it is also possible to fill the inner fluid containers with different fluids, e.g. radioactive fluids comprising a different concentration of activity.

In the preferred embodiment of the invention, the phantom comprises an outer cover which is shaped as a part (e.g. a thorax) of a human body, wherein the inner fluid container and/or the outer fluid container is arranged within the outer cover.

It should further be noted that the invention also encompasses a tomographic medical imaging apparatus comprising the afore-mentioned phantom for testing the tomographic medical imaging apparatus.

The invention is particularly suitable for testing a nuclear imaging apparatus, e.g. a single photon emission computed tomography (SPECT) apparatus or a positron emission tomography (PET) apparatus. However, it is alternatively possible that the tomographic medical imaging apparatus is a computer tomography (CT) apparatus or a magnetic resonance imaging (MRI) apparatus.

Finally, the invention also encompasses the use of the afore-mentioned phantom for testing a tomographic medical imaging apparatus.

The invention and its particular features and advantages will become more apparent from the following detailed description considered with reference to the accompanying drawings.

### Brief description of the drawings

- Figure 1: shows a perspective view of a preferred embodiment of a phantom according to the invention for testing a tomographic medical imaging apparatus.
- Figure 2: is a frontal view of the phantom of Figure 1.
- Figure 3: is a side view of the phantom according to Figures 1 and 2.
- Figure 4: is a top view of the phantom according to Figures 1 to 3.
- Figure 5A: is a schematic view of a tomographic medical imaging apparatus comprising the phantom.
- Figure 5B: shows a different orientation of the phantom within the tomographic medical imaging apparatus.
- Figure 5C: shows another possible orientation of the phantom within the tomographic medical imaging apparatus.

### Detailed description of the drawings

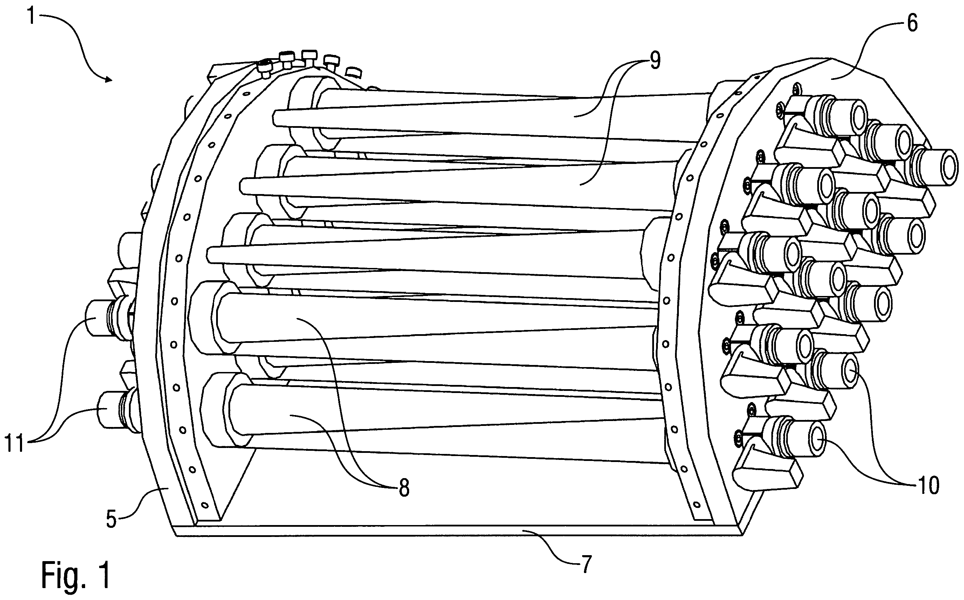

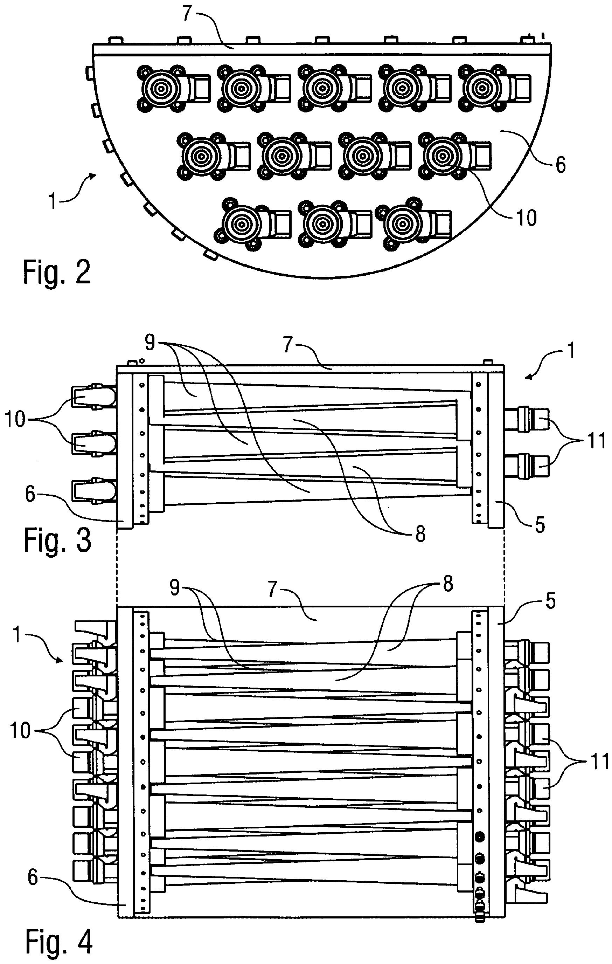

Figures 1-4 show the preferred embodiment of a phantom 1 according to the invention.

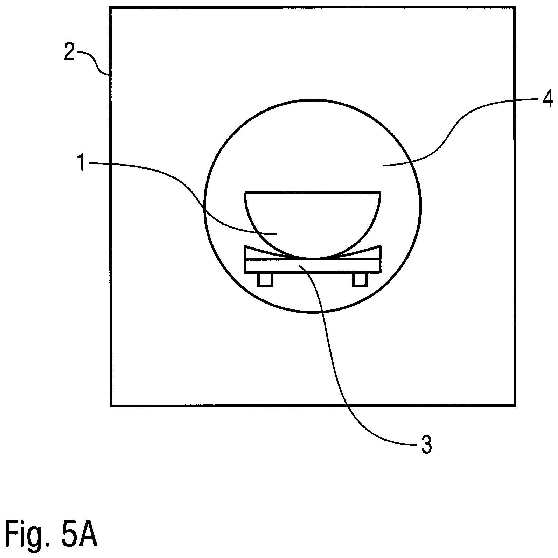

The phantom 1 can be used for simulation of a human body during testing of a SPECT apparatus 2 (SPECT: single photon emission computed tomography) as shown in Figure 5A. During testing, the phantom 1 is placed on a patient bed 3 of the SPECT apparatus 2 and moved into a cylindrical gantry opening 4 of the SPECT apparatus 2.

The phantom 1 is substantially semi-cylindrical and comprises two semi-circular end plates 5, 6 which are mechanically connected by a flat base plate 7. The semi-cylindrical shape of the phantom 1 is advantageous since the phantom 1 can be easily placed on the patient bed 3 and moved into the gantry opening 4 of the SPECT apparatus 2.

Further, the phantom 1 comprises a first number of elongated structures in the form of cone-shaped inner containers 8 which are attached to the end plate 5. Further, the phantom 1 comprises a number of elongated structures in the form of inner containers 9 which are attached to the end plate 6.

The inner containers 8 on the one hand and the inner containers 9 on the other hand taper in different directions.

Further, the inner fluid containers 8 are laterally displaced with regard to the inner fluid containers 9 so that the inner fluid containers 8 are out of the sphere of influence of the inner fluid containers 9 and vice versa.

It should further be noted that the end plate 6 comprises several connections including a valve for filling and emptying the inner fluid containers 9. The end plate 5 also comprises several connections 11 including valves for filling and emptying the inner fluid containers 8.

Figures 1-4 show the phantom 1 in a partially disassembled state without an outer cover so that the inner fluid containers 8, 9 are clearly visible. However, in operation, an outer cover made of acrylic glass is mounted onto the phantom thereby forming an outer fluid container surrounding the inner fluid containers 8, 9. The outer fluid container can itself be filled with a fluid, e.g. a radio contrast agent.

It should further be noted that the inner fluid containers 8, 9 and the outer fluid container can be filled and emptied separately and with different contrast agents.

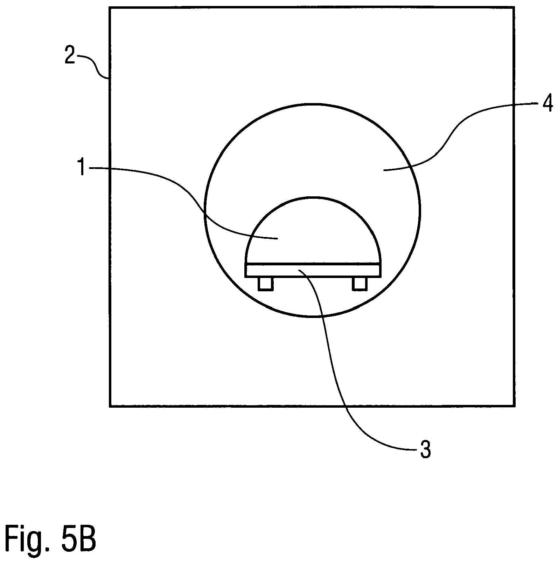

Figure 5B shows a modification of the embodiment of Figure 5A. In this embodiment, the phantom 1 comprises a different orientation within the gantry opening 4 with the convex side facing upwards.

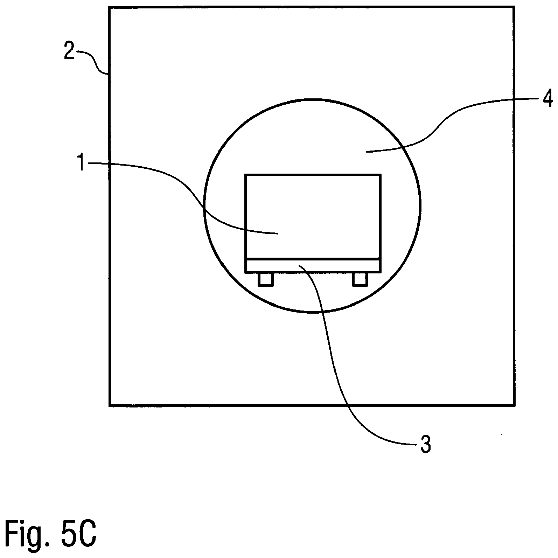

Finally, Figure 5C shows a modification of the embodiment of Figure 5A. In this embodiment, the phantom 1 comprises a different orientation within the gantry opening 4 with the axis of the phantom 1 being aligned perpendicular to the axis of the SPECT apparatus 2. Such an orientation of the phantom 1 allows a determination of the spatial resolution not only in an axial direction but also in other directions.

Although the invention has been described with reference to the particular arrangement of parts, features and the like, these are not intended to exhaust all possible arrangements of features, and indeed many other modifications and variations will be ascertainable to those of skill in the art.

### List of reference numerals:

- 1: Phantom
- 2: SPECT apparatus
- 3: Patient bed
- 4: Gantry opening
- 5: End plate
- 6: End plate
- 7: Base plate
- 8: Inner fluid containers
- 9: Inner fluid containers
- 10: Connections
- 11: Connections

## Claims

1. Phantom (1) for simulation of an object in a tomographic medical imaging apparatus (2), comprising at least one elongated structure (8, 9) for testing the spatial resolution of the tomographic medical imaging apparatus (2), wherein the elongated structure (8, 9) is a massive or hollow rod arranged within the phantom (1), and wherein the elongated structure (8, 9) comprises a cross section which is varying over the length of the elongated structure (8, 9), **characterized in that** the cross section of the elongated structure (8, 9) varies continuously over its length so that it allows a continuous measurement of the spatial resolution of the tomographic medical imaging apparatus (2).

2. Phantom (1) according to claim 1, wherein the elongated structure (8, 9) is an inner fluid container (8, 9) which is arranged within the phantom (1) and which can be filled with a fluid, particularly a radioactive fluid.

3. Phantom (1) according to any of the preceding claims, wherein
a) the inner fluid container (8, 9) comprises an inner cross section that varies of its length, and/or
b) the elongated structure (8, 9) is substantially cone shaped, and/or
c) the elongated structure (8, 9) tapers along its length, and/or
d) the inner fluid container (8, 9) comprises an inner diameter in the range of 2mm to 15mm, particularly for single photon emission computed tomography of human beings, or
e) the inner fluid container (8, 9) comprises an inner diameter in the range of 0.1mm to 10mm, particularly for single photon emission computed tomography of small animals, or
f) the inner fluid container (8, 9) comprises an inner diameter in the range of 0.5mm to 10mm, particularly for positron emission tomography, or
g) the inner fluid container (8, 9) comprises an inner diameter in the range of 50µm to 1mm, particularly for computer tomography of human beings, or
h) the inner fluid container (8, 9) comprises an inner diameter in the range of 100µm to 2mm, particularly for magnet resonance imaging.

4. Phantom (1) according to any of the preceding claims, further comprising an outer fluid container surrounding the elongated structure (8, 9), wherein the outer fluid container can be filled with a fluid.

5. Phantom (1) according to claim 4, wherein
a) the phantom (1) and/or the outer fluid container is substantially shaped as a half cylinder, and/or
b) the phantom (1) and/or the outer fluid container comprises a substantially flat side face.

6. Phantom (1) according to claim 4 or 5, wherein
a) the outer fluid container comprises two opposing end faces, and/or
b) the opposing end faces are substantially parallel, and/or
c) the elongated structure (8, 9) extends between the opposing end faces of the outer fluid container, or
d) the elongated structure (8, 9) projects into the outer fluid container from one of the end faces of the outer fluid container without extending up to the opposing end face of the outer fluid container.

7. Phantom (1) according to any of claims 4 to 6, wherein
a) the phantom (1) comprises a first end plate (5) closing a first end face of the outer fluid container, and
b) the phantom (1) comprises a second end plate (6) closing a second end face of the outer fluid container opposite said first end face,
c) a first number of said elongated structures (8) is attached to the first end plate (5), and
d) a second number of said elongated structures (9) is attached to said second end plate (6).

8. Phantom (1) according to claim 7, wherein
a) the first number of the elongated structures (8) is laterally displaced relative to the second number of the elongated structures (9), and/or
b) the elongated structures (8, 9) are out of the sphere of influence of the inner fluid containers (9) and vice versa.

9. Phantom (1) according to claim 7 or 8, wherein
a) the elongated structures (8, 9) each taper along their length so that the elongated structures (8, 9) each comprise a base area and an opposing apex, and
b) the base area of the elongated structures (8, 9) is attached to the first and second end plates (5, 6), and
c) the apex of the elongated structures (8, 9) axially projects into the outer fluid container.

10. Phantom (1) according to any of the preceding claims, wherein
a) there are several elongated structures (8, 9) arranged within the phantom (1), and
b) the elongated structures (8, 9) taper in opposing directions, and/or
c) the inner fluid containers (8, 9) can be filled separately, and/or
d) the elongated structures (8, 9) are arranged in parallel, and/or
e) the lateral distance between the adjacent elongated structures (8, 9) is greater than the spatial resolution of the tomographic medical imaging apparatus (2).

11. Phantom (1) according to any of the preceding claims, wherein the inner fluid container (8, 9) and/or the outer fluid container comprises a wall which is at least partially transparent.

12. Phantom (1) according to any of the preceding claims, wherein
a) the elongated structures (8, 9) are arranged substantially vertically within the phantom (1), and
b) the elongated structures (8, 9) taper from the upper side to the lower side of the phantom (1), and/or
c) the elongated structures (8, 9) are arranged substantially vertically within the phantom (1).

13. Phantom (1) according to any of the preceding claims, wherein
a) the inner fluid containers (8, 9) can be filled or emptied through at least one valve, and/or
b) each of the inner fluid containers (8, 9) comprises an associated valve for filling and emptying.

14. Phantom (1) according to any of the preceding claims, wherein
a) the tomographic medical imaging apparatus (2) detects a specific radiation, wherein the radiation preferably comprises an energy in the range of 25keV to 511keV, and
b) the inner fluid container (8, 9) and/or the outer fluid container comprises walls which are made from a material having a first attenuation coefficient regarding the radiation used by the tomographic medical imaging apparatus (2), and
c) water comprises a second attenuation coefficient with regard to the radiation used by the tomographic medical imaging apparatus (2), and
d) the first attenuation coefficient corresponds to the second attenuation coefficient, and/or
e) the first attenuation coefficient is in a range of ±10%, ±5% or ±1% around the second attenuation coefficient.

15. Phantom (1) according to any of the preceding claims, wherein the inner fluid containers (8, 9) are filled with
a) air,
b) inactive water,
c) a contrast agent, particularly a radiocontrast agent or an MRI contrast agent, or
d) a first radioactive liquid.

16. Phantom (1) according to any of the preceding claims, wherein the outer fluid container is filled with
a) air,
b) inactive water,
c) a contrast agent, particularly a radiocontrast agent or an MRI contrast agent, or
d) a second radioactive liquid.

17. Phantom (1) according to any of claims 4 to 16, wherein
a) the inner fluid container (8, 9) and the outer fluid container are filled with different fluids, and/or
b) the fluid in the inner fluid container (8, 9) has a different concentration of activity than the fluid in the outer fluid container.

18. Phantom (1) according to any of the preceding claims, further comprising an outer cover which is shaped as a part of a human body, particularly a thorax, wherein the inner fluid container (8, 9) and/or the outer fluid container is arranged within the outer cover.

19. Tomographic medical imaging apparatus (2) comprising a phantom (1) according to one of the preceding claims.

20. Tomographic medical imaging apparatus (2) according to claim 19, wherein the tomographic medical imaging apparatus (2) is
a) a nuclear imaging apparatus (2), particularly a single photon emission computed tomography apparatus (2) or a positron emission tomography apparatus, or
b) a computer tomography apparatus, or
c) a magnetic resonance tomography imaging apparatus.

21. Use of a phantom (1) according to any of claims 1 to 18 for testing a tomographic medical imaging apparatus (2).

## Patentansprüche

1. Phantom (1) zur Simulation eines Objekts in einer tomographischen medizinischen Bildgebungsvorrichtung (2), umfassend mindestens eine langgestreckte Struktur (8, 9) zum Testen der räumlichen Auflösung der tomographischen medizinischen Bildgebungsvorrichtung (2), wobei die langgestreckte Struktur (8, 9) ein massiver oder hohler Stab ist, der innerhalb des Phantoms (1) angeordnet ist, und wobei die langgestreckte Struktur (8, 9) einen Querschnitt aufweist, der über die Länge der langgestreckten Struktur (8, 9) variiert, **dadurch gekennzeichnet, dass** der Querschnitt der langgestreckten Struktur (8, 9) kontinuierlich über ihre Länge variiert, so dass sie eine kontinuierliche Messung der räumlichen Auflösung der tomographischen medizinischen Bildgebungsvorrichtung (2) erlaubt.

2. Phantom (1) gemäß Anspruch 1, wobei die langgestreckte Struktur (8, 9) ein innerer Fluidbehälter (8, 9) ist, der innerhalb des Phantoms (1) angeordnet ist und der mit einem Fluid, insbesondere einem radioaktiven Fluid, gefüllt werden kann.

3. Phantom (1) gemäß einem der vorangehenden Ansprüche, wobei
a) der innere Fluidbehälter (8, 9) einen Innenquerschnitt aufweist, der über seine Länge variiert, und/oder
b) die langgestreckte Struktur (8, 9) im Wesentlichen konusförmig ist, und/oder
c) sich die langgestreckte Struktur (8, 9) entlang ihrer Länge verjüngt, und/oder
d) der innere Fluidbehälter (8, 9) einen Innendurchmesser im Bereich von 2mm bis 15mm aufweist, insbesondere zur Einzelphotonen-Emissionscomputertomographie von Menschen, oder
e) der innere Fluidbehälter (8, 9) einen Innendurchmesser im Bereich von 0,1mm bis 10mm aufweist, insbesondere zur Einzelphotonen-Emissionscomputertomographie von kleinen Tieren, oder
f) der innere Fluidbehälter (8, 9) einen Innendurchmesser im Bereich von 0,5mm bis 10mm aufweist, insbesondere zur Positronen-Emissions-Tomographie, oder
g) der innere Fluidbehälter (8, 9) einen Innendurchmesser im Bereich von 50µm bis 1mm aufweist, insbesondere zur Computertomographie von Menschen, oder
h) der innere Fluidbehälter (8, 9) einen Innendurchmesser im Bereich von 100µm bis 2mm aufweist, insbesondere zur Magnetresonanzbildgebung.

4. Phantom (1) gemäß einem der vorangehenden Ansprüche, weiterhin aufweisend einen äußeren Fluidbehälter, der die langgestreckte Struktur (8, 9) umgibt, wobei der äußere Fluidbehälter mit einem Fluid gefüllt werden kann.

5. Phantom (1) gemäß Anspruch 4, wobei
a) das Phantom (1) und/oder der äußere Fluidbehälter im Wesentlichen als Halbzylinder geformt ist, und/oder
b) das Phantom (1) und/oder der äußere Fluidbehälter eine im Wesentlichen flache Seitenfläche aufweist.

6. Phantom (1) gemäß Anspruch 4 oder 5, wobei
a) der äußere Fluidbehälter zwei gegenüberliegende Stirnflächen aufweist, und/oder
b) die gegenüberliegenden Stirnflächen im Wesentlichen parallel sind, und/oder
c) sich die langgestreckte Struktur (8, 9) zwischen den gegenüberliegenden Stirnflächen des äußeren Fluidbehälters erstreckt, oder
d) die langgestreckte Struktur (8, 9) von einer der Stirnflächen des äußeren Fluidbehälters in den äußeren Fluidbehälter hineinragt ohne sich bis zu der gegenüberliegenden Stirnfläche des äußeren Fluidbehälters zu erstrecken.

7. Phantom (1) gemäß einem der Ansprüche 4 bis 6, wobei
a) das Phantom (1) eine erste Endplatte (5) aufweist, welche die erste Stirnfläche des äußeren Fluidbehälters abschließt, und
b) das Phantom (1) eine zweite Endplatte (6) aufweist, welche eine zweite Stirnfläche des äußeren Fluidbehälters gegenüber der ersten Stirnfläche abschließt,
c) eine erste Anzahl der langgestreckten Strukturen (8) an der ersten Endplatte (5) befestigt ist, und
d) eine zweite Anzahl der langgestreckten Strukturen (9) an der zweiten Endplatte (6) befestigt ist.

8. Phantom (1) gemäß Anspruch 7, wobei
a) die erste Anzahl der langgestreckten Strukturen in seitlicher Richtung relativ zu der zweiten Anzahl der langgestreckten Strukturen (9) versetzt ist, und/oder
b) die langgestreckten Strukturen (8, 9) außerhalb des Einflussbereichs des inneren Fluidbehälters (9) und umgekehrt liegen.

9. Phantom (1) gemäß Anspruch 7 oder 8, wobei
a) die langgestreckten Strukturen (8, 9) sich entlang ihrer Länge verjüngen, so dass die langgestreckten Strukturen (8, 9) jeweils einen Basisbereich und eine gegenüberliegende Spitze aufweisen, und
b) der Basisbereich der langgestreckten Strukturen (8, 9) an den ersten und zweiten Endplatten (5, 6) befestigt ist, und
c) die Spitze der langgestreckten Strukturen (8, 9) in axialer Richtung in den äußeren Fluidbehälter hineinragt.

10. Phantom (1) gemäß einem der vorangehenden Ansprüche, wobei
a) es mehrere langgestreckte Strukturen (8, 9) gibt, die innerhalb des Phantoms (1) angeordnet sind, und
b) die langgestreckten Strukturen (8, 9) sich in entgegengesetzten Richtungen verjüngen, und/oder
c) die inneren Fluidbehälter (8, 9) getrennt befüllt werden können, und/oder
d) die langgestreckten Strukturen parallel angeordnet sind, und/oder
e) der seitliche Abstand zwischen den benachbarten langgestreckten Strukturen (8, 9) größer ist als die räumliche Auflösung der tomographischen medizinischen Bildgebungsvorrichtung (2).

11. Phantom (1) gemäß einem der vorangehenden Ansprüche, wobei der innere Fluidbehälter (8, 9) und/oder der äußere Fluidbehälter eine Wand aufweist, die mindestens teilweise durchsichtig ist.

12. Phantom (1) gemäß einem der vorangehenden Ansprüche, wobei
a) die langgestreckten Strukturen (8, 9) im Wesentlichen vertikal innerhalb des Phantoms (1) angeordnet sind, und
b) die langgestreckten Strukturen (8, 9) sich von der Oberseite zu der Unterseite des Phantoms (1) verjüngen, und/oder
c) die langgestreckten Strukturen (8, 9) im Wesentlichen vertikal innerhalb des Phantoms (1) angeordnet sind.

13. Phantom (1) gemäß einem der vorangehenden Ansprüche, wobei
a) die inneren Fluidbehälter (8, 9) durch mindestens ein Ventil gefüllt oder entleert werden können, und/oder
b) jeder der inneren Fluidbehälter (8, 9) ein zugehöriges Ventil zum Befüllen und Entleeren aufweist.

14. Phantom (1) gemäß einem der vorangehenden Ansprüche, wobei
a) die tomographische medizinische Bildgebungsvorrichtung (2) eine bestimmte Strahlung detektiert, wobei die Strahlung vorzugsweise eine Energie im Bereich von 25keV bis 511keV aufweist, und
b) der innere Fluidbehälter (8, 9) und/oder der äußere Fluidbehälter Wände aufweist, die aus einem Material hergestellt sind, das einen ersten Abschwächungskoeffizienten bezüglich der von der tomographischen medizinischen Bildgebungsvorrichtung (2) verwendeten Strahlung aufweist, und
c) Wasser einen zweiten Abschwächungskoeffizienten in Bezug auf die Strahlung aufweist, die von der tomographischen medizinischen Bildgebungsvorrichtung (2) verwendet wird, und
d) der erste Abschwächungskoeffizient dem zweiten Abschwächungskoeffizienten entspricht und/oder
e) der erste Abschwächungskoeffizient im Bereich von ±10%, ±5% oder ±1% um den zweiten Abschwächungskoeffizienten liegt.

15. Phantom (1) gemäß einem der vorangehenden Ansprüche, wobei die inneren Fluidbehälter (8, 9) gefüllt sind mit
a) Luft,
b) inaktivem Wasser,
c) einem Kontrastmittel, insbesondere einem Strahlungskontrastmittel oder einem MRI-Kontrastmittel, oder
d) einer ersten radioaktiven Flüssigkeit.

16. Phantom (1) gemäß einem der vorangehenden Ansprüche, wobei der äußere Fluidbehälter gefüllt ist mit
a) Luft,
b) inaktivem Wasser,
c) einem Kontrastmittel, insbesondere einem Strahlungskontrastmittel oder einem MRI-Kontrastmittel, oder
d) einer zweiten radioaktiven Flüssigkeit.

17. Phantom (1) gemäß einem der Ansprüche 4 bis 16, wobei
a) der innere Fluidbehälter (8, 9) und der äußere Fluidbehälter mit verschiedenen Fluiden gefüllt sind, und/oder
b) das Fluid in dem inneren Fluidbehälter (8, 9) eine andere Aktivitätskonzentration hat als das Fluid in dem äußeren Fluidbehälter.

18. Phantom (1) gemäß einem der vorangehenden Ansprüche, weiterhin aufweisend eine äußere Abdeckung, die geformt ist als ein Teil eines menschlichen Körpers, insbesondere eines Brustkorbs, wobei der innere Fluidbehälter (8, 9) und/oder der äußere Fluidbehälter innerhalb der äußeren Abdeckung angeordnet ist.

19. Tomographische medizinische Bildgebungsvorrichtung (2) umfassend ein Phantom (1) gemäß einem der vorangehenden Ansprüche.

20. Tomographische medizinische Bildgebungsvorrichtung (2) gemäß Anspruch 19, wobei die tomographische medizinische Bildgebungsvorrichtung (2) ist:
a) eine nukleare Bildgebungsvorrichtung (2), insbesondere eine Einzelphotonen-Emissionscomputertomographievorrichtung (2) oder eine Positronen-Emissions-Tomographievorrichtung, oder
b) eine Computertomographievorrichtung, oder
c) eine Magnetresonanztomographiebildgebungsvorrichtung.

21. Verwendung eines Phantoms (1) gemäß einem der Ansprüche 1 bis 18 zum Testen einer tomographischen medizinischen Bildgebungsvorrichtung (2).

## Revendications

1. Fantôme (1) pour la simulation d'un objet dans un appareil d'imagerie médical tomographique (2), comprenant au moins une structure allongée (8, 9) destinée à éprouver la résolution spatiale de l'appareil d'imagerie médical tomographique (2), dans lequel la structure allongée (8, 9) est une tige massive ou creuse agencée au sein du fantôme (1), et dans lequel la structure allongée (8, 9) comprend une coupe transversale qui est variable suivant la longueur de la structure allongée (8, 9), **caractérisé en ce que** la coupe transversale de la structure allongée (8, 9) varie continuellement suivant sa longueur de sorte qu'elle permet une mesure continue de la résolution spatiale de l'appareil d'imagerie médical tomographique (2).

2. Fantôme (1) selon la revendication 1, dans lequel la structure allongée (8, 9) est un contenant de fluide interne (8, 9) qui est agencé au sein du fantôme (1) et qui peut être rempli d'un fluide, en particulier d'un fluide radioactif.

3. Fantôme (1) selon l'une quelconque des revendications précédentes, dans lequel
a) le contenant de fluide interne (8, 9) comprend une coupe transversale interne qui varie suivant sa longueur, et/ou
b) la structure allongée (8, 9) est sensiblement en forme de cône, et/ou
c) la structure allongée (8, 9) s'effile dans sa longueur, et/ou
d) le contenant de fluide interne (8, 9) comprend un diamètre interne dans la plage de 2 mm à 15 mm, en particulier pour une tomographie d'émission monophotonique d'êtres humains, ou
e) le contenant de fluide interne (8, 9) comprend un diamètre interne dans la plage de 0,1 mm à 10 mm, en particulier pour la tomographie d'émission monophotonique de petits animaux, ou
f) le contenant de fluide interne (8, 9) comprend un diamètre interne dans la plage de 0,5 mm à 10 mm, en particulier pour une tomographie d'émission de positons, ou
g) le contenant de fluide interne (8, 9) comprend un diamètre interne dans la plage de 50 µm à 1 mm, en particulier pour une tomographie informatisée d'êtres humains, ou
h) le contenant de fluide interne (8, 9) comprend un diamètre interne dans la plage de 100 µm à 2 mm, en particulier pour une imagerie par résonance magnétique.

4. Fantôme (1) selon l'une quelconque des revendications précédentes, comprenant en outre un contenant de fluide externe entourant la structure allongée (8, 9), dans lequel le contenant de fluide externe peut être rempli d'un fluide.

5. Fantôme (1) selon la revendication 4, dans lequel
a) le fantôme (1) et/ou le contenant de fluide externe est sensiblement conformé comme un demi-cylindre, et/ou
b) le fantôme (1) et/ou le contenant de fluide externe comprend une face latérale sensiblement plate.

6. Fantôme (1) selon la revendication 4 ou 5, dans lequel
a) le contenant de fluide externe comprend deux faces d'extrémité opposée, et/ou
b) les faces d'extrémité opposée sont sensiblement parallèles, et/ou
c) la structure allongée (8, 9) s'étend entre les faces d'extrémité opposée du contenant de fluide externe, ou
d) la structure allongée (8, 9) dépasse dans le contenant de fluide externe depuis l'une des faces d'extrémité du contenant de fluide externe sans se prolonger jusqu'à la face d'extrémité opposée du contenant de fluide externe.

7. Fantôme (1) selon l'une quelconque des revendications 4 à 6, dans lequel
a) le fantôme (1) comprend une première plaque d'extrémité (5) fermant une première face d'extrémité du contenant de fluide externe, et
b) le fantôme (1) comprend une seconde plaque d'extrémité (6) fermant une seconde face d'extrémité du contenant de fluide externe opposée à ladite première face d'extrémité,
c) un premier nombre desdites structures allongées (8) est attaché à la première plaque d'extrémité (5), et
d) un second nombre desdites structures allongées (9) est attaché à ladite seconde plaque d'extrémité (6).

8. Fantôme (1) selon la revendication 7, dans lequel
a) le premier nombre des structures allongées (8) est latéralement déplacé par rapport au second nombre des structures allongées (9), et/ou
b) les structures allongées (8, 9) sont hors de la sphère d'influence des contenants de fluide interne (9) et vice versa.

9. Fantôme (1) selon la revendication 7 ou 8, dans lequel
a) les structures allongées (8, 9) s'effilent chacune suivant leur longueur de sorte que les structures allongées (8, 9) comprennent chacune une aire de base et un sommet opposé, et
b) l'aire de base des structures allongées (8, 9) est attachée aux première et seconde plaques d'extrémité (5, 6), et
c) le sommet des structures allongées (8, 9) dépasse axialement dans le contenant de fluide externe.

10. Fantôme (1) selon l'une quelconque des revendications précédentes, dans lequel
a) plusieurs structures allongées (8, 9) sont agencées au sein du fantôme (1), et
b) les structures allongées (8, 9) s'effilent dans des directions opposées, et/ou
c) les contenants de fluide interne (8, 9) peuvent être remplis séparément, et/ou
d) les structures allongées (8, 9) sont agencées en parallèle, et/ou
e) la distance latérale entre les structures allongées adjacentes (8, 9) est plus grande que la résolution spatiale de l'appareil d'imagerie médical tomographique (2).

11. Fantôme (1) selon l'une quelconque des revendications précédentes, dans lequel le contenant de fluide interne (8, 9) et/ou le contenant de fluide externe comprennent une paroi qui est au moins partiellement transparente.

12. Fantôme (1) selon l'une quelconque des revendications précédentes, dans lequel
a) les structures allongées (8, 9) sont agencées sensiblement verticalement au sein du fantôme (1), et
b) les structures allongées (8, 9) s'effilent du côté supérieur au côté inférieur du fantôme (1), et/ou
c) les structures allongées (8, 9) sont agencées sensiblement verticalement au sein du fantôme (1).

13. Fantôme (1) selon l'une quelconque des revendications précédentes, dans lequel
a) les contenants de fluide interne (8, 9) peuvent être remplis ou vidés à travers au moins une vanne, et/ou
b) chacun des contenants de fluide interne (8, 9) comprend une vanne associée pour le remplissage et le vidage.

14. Fantôme (1) selon l'une quelconque des revendications précédentes, dans lequel
a) l'appareil d'imagerie médical tomographique (2) détecte un rayonnement spécifique, dans lequel le rayonnement comprend de préférence une énergie dans la plage de 25 keV à 511 keV, et
b) le contenant de fluide interne (8, 9) et/ou le contenant de fluide externe comprennent des parois qui sont faites d'un matériau ayant un premier coefficient d'atténuation concernant le rayonnement utilisé par l'appareil d'imagerie médical tomographique (2), et
c) l'eau comprend un second coefficient d'atténuation par rapport au rayonnement utilisé par l'appareil d'imagerie médical tomographique (2), et
d) le premier coefficient d'atténuation correspond au second coefficient d'atténuation, et/ou
e) le premier coefficient d'atténuation est dans une plage de ± 10 %, ± 5 % ou ± 1 % autour du second coefficient d'atténuation.

15. Fantôme (1) selon l'une quelconque des revendications précédentes, dans lequel les contenants de fluide interne (8, 9) sont remplis
a) d'air,
b) d'eau inactive,
c) d'un agent de contraste, en particulier d'un agent de radiocontraste ou d'un agent de contraste d'IRM, ou
d) d'un premier liquide radioactif.

16. Fantôme (1) selon l'une quelconque des revendications précédentes, dans lequel le contenant de fluide externe est rempli
a) d'air,
b) d'eau inactive,
c) d'un agent de contraste, en particulier d'un agent de radiocontraste ou d'un agent de contraste d'IRM, ou
d) d'un second liquide radioactif.

17. Fantôme (1) selon l'une quelconque des revendications 4 à 16, dans lequel
a) le contenant de fluide interne (8, 9) et le contenant de fluide externe sont remplis de fluides différents, et/ou
b) le fluide dans le contenant de fluide interne (8, 9) a une concentration d'activité différente du fluide dans le contenant de fluide externe.

18. Fantôme (1) selon l'une quelconque des revendications précédentes, comprenant en outre un couvercle externe qui est conformé comme une partie d'un corps humain, en particulier un thorax, dans lequel le contenant de fluide interne (8, 9) et/ou le contenant de fluide externe sont agencés au sein du couvercle externe.

19. Appareil d'imagerie médical tomographique (2) comprenant un fantôme (1) selon l'une des revendications précédentes.

20. Appareil d'imagerie médical tomographique (2) selon la revendication 19, dans lequel l'appareil d'imagerie médical tomographique (2) est
a) un appareil d'imagerie nucléaire (2), en particulier un appareil de tomographie d'émission monophotonique (2) ou un appareil de tomographie d'émission de positons, ou
b) un appareil de tomographie informatisé, ou
c) un appareil d'imagerie par tomographie par résonance magnétique.

21. Utilisation d'un fantôme (1) selon l'une quelconque des revendications 1 à 18 permettant d'éprouver un appareil d'imagerie médical tomographique (2).
